# EUROPEAN PATENT SPECIFICATION

(11) **EP 2 075 550 B1**
(45) Date of publication and mention of the grant of the patent: **22.03.2017**
(21) Application number: 08022259.9
(22) Date of filing: 22.12.2008
(51) Int. Cl.: G01B 11/24, G01D 5/26, G02B 21/24

(54) **Optical displacement measuring instrument**
Optische Positionsmessvorrichtung
Instrument optique de mesure de déplacement

(30) Priority: 25.12.2007 JP 2007332296
(43) Date of publication of application: 01.07.2009
(73) Proprietor: Mitutoyo Corporation, Kawasaki-shi, Kanagawa 213-8533 (JP)
(72) Inventor: Yutaka, Miki, Kawasaki-shi, Kanagawa 213-8533 (JP)
(74) Representative: Grünecker Patent- und Rechtsanwälte PartG mbB

(56) References cited:
- JP-A- H08 128 806
- JP-A- 2004 239 646
- US-A1- 2004 004 726

## Description

### BACKGROUND OF THE INVENTION

### 1. FIELD OF THE INVENTION

The present invention relates to an optical displacement measuring instrument that moves an objective lens or a focusing lens so as to bring a focal point into coincidence with a measuring face, for measuring a profile of the measuring face based on a movement of the objective lens or the focusing lens.

### 2. DESCRIPTION OF RELATED ART

Conventionally, an arrangement for irradiating light onto a measuring face and measuring a profile of the measuring face has been known (for instance, see a document 1: JP-A-8-128806).

According to the arrangement disclosed in the document 1, a space filter is disposed in an optical path between a signal detecting optical system and a beam splitter. Adjacent to the center of the space filter, a shield is provided. By guiding reflected light from a surface of an object to the shield, a light volume of the reflected light near its optical axis is shielded or reduced, so that a ratio of the maximum value to the minimum value of a light volume of received light detected by the signal detecting optical system is decreased, thereby preventing a decrease in SN ratio.

However, when a profile of a target object exemplarily includes such a curved surface that a slanting angle of its measuring face is larger than a radiation angle of condensed light condensed by a lens and incident on the measuring face, the arrangement according to the above-described document 1 may not favorably measure the profile of the target object.

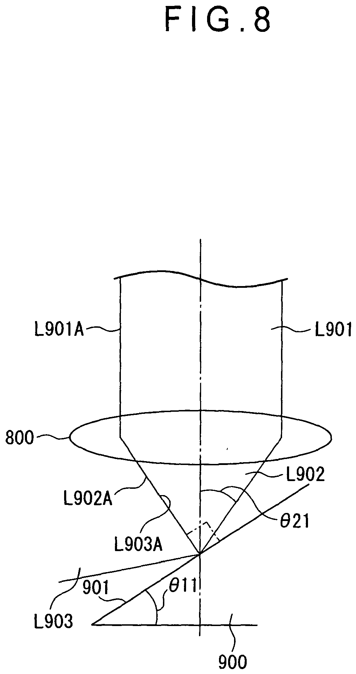

Specifically, according to the arrangement of the document 1, as shown in Fig. 8, condensed light L902 generated by condensing parallel light L901 with an objective lens 800 and incident on a target object 900 is reflected on a measuring face 901, thereby forming reflected light L903. When a slanting angle θ11 of the measuring face 901 is equal to a radiation angle θ21 of the condensed light L902, only an outer edge of the condensed light L902 (hereinafter called as condensed-light outer edge) and an outer edge of the reflected light L903 (hereinafter called as reflected-light outer edge) are overlapped while the condensed light L902 and the reflected light L903 are not overlapped at any other portion. In other words, an angle formed between the condensed-light outer edge L902A and the reflected-light outer edge L903A is 0 degree. At this time, the reflected-light outer edge L903A overlapped with the condensed light L902 proceeds along an outer edge L901A of the parallel light L901 (hereinafter called as parallel-light outer edge), so that the reflected-light outer edge L903A cannot be used for detecting a focusing point of a received beam of light.

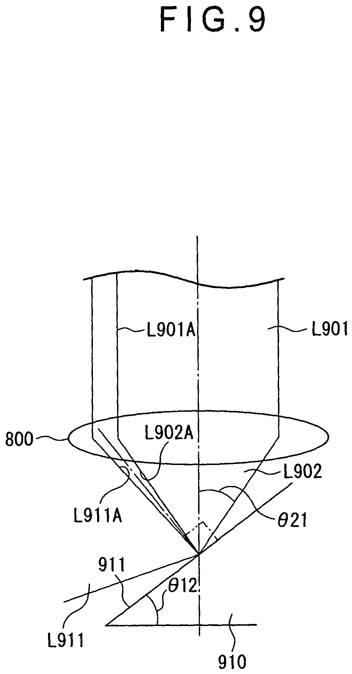

In addition, as shown in Fig. 9, when the slanting angle θ12 of the measuring face 911 of the target object 910 is larger than the radiation angle θ21 of the condensed light L902, the condensed light L902 and the reflected light L911 are not overlapped with each other. In other words, the angle formed between the condensed-light outer edge L902A and the reflected-light outer edge L911A is less than 0 degree. At this time, the reflected-light outer edge L911A passes through the objective lens 800 and subsequently proceeds at a position external to the parallel-light outer edge L901A, so that the reflected-light outer edge L911A cannot be used as the received beam of light.

Therefore, the angle formed between the irradiating beam and the received beam of light is 0 degree in such an arrangement as shown in Fig. 8 while no received beam of light is present in such an arrangement as shown in Fig. 9. Thus, sensitivity for detecting a focusing point is lost.

When the sensitivity for detecting a focusing point is lost and a profile of the target object in which a curved surface is included (e.g., spherical or columnar object) is attempted to be followed, positioning of a focusing lens may be erroneously controlled so that an extension of a measuring beam constantly penetrates the curvature center of the measuring face, at portions where the slanting angle of the measuring face is larger than the radiation angle of the condensed light. Thus, in a profile measurement record, record corresponding to the portions where the slanting angle of the measuring face is larger than the radiation angle of the condensed light may erroneously show that the portions are obliquely bulged or recessed from the measuring face, so that only useless record may be obtained.

US 2004/0004726 relates to overlay targets with isolated critical-dimension features and apparatus to measure overplay. This prior art discloses an optical metrology system which is configured to minimize the measurement of specularly reflected light and measure primarily scattered light. The system is similar to prior art beam profile measurements but includes a movable baffle to selectively block specularly reflected light.

JP 2004239646 relates to an optical measuring unit for measuring displacement and inclination with high accuracy. The optical Measuring unit includes a photo acceptance unit that receives reflected light from a work piece and distance to the work piece is measured based on a position signal of a lens position detention coil when a photo acceptance signal from the photo acceptance unit becomes a maximum in a control means.

### SUMMARY OF THE INVENTION

In view of the above problem(s), an object of the invention is to provide an optical displacement measuring instrument capable of favorably measuring a target object of which measuring face is, for instance, slanted or curved.

An optical displacement measuring instrument according to an aspect of the invention includes: a light source; a collimating lens that collimates light from the light source and outputs the light as parallel light; an objective lens that condenses the parallel light from the collimating lens, illuminates the condensed light onto a measuring face of a target object and receives reflected light from the measuring face; a moving unit that moves the objective lens or a focusing lens disposed between the objective lens and the light source along an optical axis; a position detector that detects a position of the objective lens or a position of the focusing lens; and a focussing unit that recognizes a positional displacement between a focal point of the objective lens and the measuring face based on reflected light and operates the moving unit to bring the focal point of the objective lens into coincidence with the measuring face, the reflected light having been reflected on the measuring face and having passed though the objective lens, in which the focusing unit includes: a light splitter for splitting the reflected light having reflected on the measuring face and having passed through the objective lens into two split light of first reflected light and second reflected light; a first light-receiving element array and a second light-receiving element array respectively disposed anterior to an image-forming point of the first reflected light and posterior to a image-forming point of the second reflected light, a plurality of pixels being two-dimensionally aligned in each of the first light-receiving element array and the second light-receiving element array, excepts light-receiving signals from pixels having the highest brightness to the nth highest brightness (n being an integer) and calculates a total value of light-receiving signals from the remaining pixels; and a servo circuit for operating the moving unit so that the total value of the light-receiving signals of the first light-receiving element array calculated by the light-receiving signal calculator becomes equal to the total value of the light-receiving signals of the second light-receiving element array calculated by the light-receiving signal calculator, the operation of the moving unit bringing the focal point of the objective lens into coincidence with the measuring face.

According to this arrangement, the light from the light source is collimated by the collimating lens to be parallel light and incident on the objective lens. Then, the objective lens condenses the parallel light and illuminates the condensed parallel light on the measuring face of the target object. The reflected light reflected by the measuring face passes through the objective lens to be received by the focusing unit. The focusing unit moves the moving unit based on the reflected light having passed through the objective lens so as to bring the focal point of the objective lens into coincidence with the measuring face. Accordingly, since the objective lens or the focusing lens is moved in accordance with the profile of the measuring face so that the focal point of the objective lens is brought into coincidence with the measuring face, the profile of the measuring face can be measured by reading the position of the objective lens or the focusing lens with the position detector.

According to the invention, the reflected light having passed through the objective lens is split by the focusing unit into two beams of light, and the two split beams of light are received by the first light-receiving element array and the second light-receiving element array respectively. Then, among the light-receiving signals from the plurality of pixels within the area predetermined in each of the first light-receiving element array and the second light-receiving element array, the light-receiving signals from the pixels having the highest brightness to the nth highest brightness (n being an integer) are excepted and the total value of light-receiving signals from the remaining pixels is calculated. The position of the objective lens or the focusing lens is controlled by the moving unit so that the total value of the light-receiving signals of the first light-receiving element array is equal to the total value of the light-receiving signals of the second light-receiving element array.

The condensed light illuminated on the measuring face by the objective lens is specularly and diffusely reflected on the measuring face. The specularly-reflected light and the diffusely-reflected light pass through the objective lens and the like to be subsequently received by the pixels in the first light-receiving element array and the second light-receiving element array.

Exemplarily when the measuring face is slanted while the angle between the outer edge of the condensed light and the reflected light (specularly-reflected light) from the measuring face is close to zero, the specularly-reflected light from the measuring face is only partially received by the pixels in the first light-receiving element array and the second light-receiving element array. As a consequence, false focusing may generate a bulging and a recess that are not present in the profile of the measuring face.

According to the aspect of the invention, among the light-receiving signals from the plurality of pixels within the area predetermined in each of the first light-receiving element array and the second light-receiving element array, the light-receiving signals from the pixels of the highest brightness to the nth highest brightness (n being an integer) are not referenced to for focusing. In other words, focusing is performed without referencing to the specularly-reflected light from the measuring face but based on the darker diffusely-reflected light. Thus, focusing can be correctly performed. Accordingly, it is possible to prevent a bulging and a recess that are not present in the profile of the measuring face from being generated by false focusing.

When the measuring face is not slanted, the reflected light is brightest at its center while reducing its brightness away from the center. In the above instance, without referencing to the central bright portion, focusing can be performed based on the other portions. Thus, there is no hindrance for focusing.

Preferably in the optical displacement measuring instrument according to the aspect of the invention, the light-receiving calculator, among the light-receiving signals from the plurality of pixels within a substantially circular area predetermined in each of the first light-receiving element array and the second light-receiving element array, excepts the light-receiving signals from the pixels having the highest brightness to the nth highest brightness (n being an integer) and calculates the total value of the light-receiving signals from the remaining pixels.

According to this arrangement, the light-receiving signals from the pixels within the substantially circular area are used for the first light-receiving element array and the second light-receiving element array. Thus, the light-receiving signals can be used as pinhole-equivalent signals of a conventional pinhole method. Hence, irrespective of in which direction the measuring face is slanted, the profile of the measuring face can be measured with high accuracy.

An optical displacement measuring instrument according to a comparative example includes: a light source; a collimating lens that collimates light from the light source and outputs the light as parallel light; an objective lens that condenses the parallel light from the collimating lens, illuminates the condensed light onto a measuring face of a target object and receives reflected light from the measuring face; a moving unit that moves the objective lens or a focusing lens disposed between the objective lens and the light source along an optical axis; a position detector that detects a position of the objective lens or a position of the focusing lens; and a focusing unit that recognizes a positional displacement between a focal point of the objective lens and the measuring face based on reflected light and operates the moving unit to bring the focal point of the objective lens into coincidence with the measuring face, the reflected light having been reflected on the measuring face and having passed though the objective lens, in which a light shield body for partially shielding an outer edge of reflected light is interposed in an optical path of the reflected light, the reflected light having been reflected on the measuring face and having passed through the objective lens to be guided into the focusing unit.

According to this arrangement, the light shield body for partially shielding the outer edge of the reflected light is interposed in an optical path of the reflected light having been reflected on the measuring face and having passed through the objective lens 170 so as to be guided into the focusing unit. Thus, by placing the light shield body in accordance with a slanting direction of the measuring face at a position through which the specularly-reflected light from the measuring face passes, focusing can be correctly performed without referencing to the specularly-reflected light from the measuring face but based on the darker diffusely-reflected light.

Preferably in the optical displacement measuring instrument according to the comparative example, the light shield body is shaped in a rectangle that partially shields the outer edge of the reflected light.

For instance, the light shield body may be shaped in a rectangle that shields the reflected light by a portion that extends across the reflected light through the center of the reflected light. Alternatively, the light shield body may be shaped in a rectangle that shields a portion of the reflected light that extends from substantially the center of the reflected light to partially the outer edge of the reflected light.

According to this arrangement, since the light shield body is shaped in a rectangle for partially shielding the outer edge of the reflected light, the remaining portion of the diffusely-reflected light can be transmitted. Accordingly, focusing can be reliably performed based on the transmitted diffusely-reflected light.

Preferably in the optical displacement measuring instrument according to the comparative example, the light shield body is rotatable around the vicinity of an optical axis of diffusely-reflected light, the diffusely-reflected light having been diffusely reflected on the measuring face and transmitted through the objective lens.

According to this arrangement, the light shield body is rotatable about the vicinity of the optical axis of the diffusely-reflected light having been diffusely reflected on the measuring face and transmitted through the objective lens. Thus, by manually or automatically rotating the light shield body in accordance with the slanting direction of the measuring face, focusing can be correctly performed constantly without referencing to the specularly-reflected light from the measuring face but based on the darker diffusely-reflected light.

### BRIEF DESCRIPTION OF THE DRAWINGS

Fig. 1 schematically shows an arrangement of an optical displacement measuring instrument according to a first exemplary embodiment of the invention.
Fig. 2 shows an optical element array according to the first exemplary embodiment.
Figs. 3A and 3B conceptually show light reflected from a slanted measuring face according to the first exemplary embodiment.
Fig. 4 schematically shows a modification of the first exemplary embodiment.
Fig. 5 schematically shows an arrangement of an optical displacement measuring instrument according to a comparative example.
Figs. 6A and 6B conceptually show light reflected from a slanted measuring face and a light shield body according to the comparative example.
Fig. 7 schematically shows a modification of the comparative example.
Fig. 8 conceptually shows a measurement with a conventional arrangement in which a slanting angle of a measuring face and a radiation angle of condensed light are equal to each other.
Fig. 9 conceptually shows a measurement with a conventional arrangement in which the slanting angle of the measuring face is larger than the radiation angle of the condensed light.

### DETAILED DESCRIPTION OF PREFERRED EMBODIMENT(S)

### First Exemplary Embodiment

### Arrangement of Optical Displacement Measuring Instrument

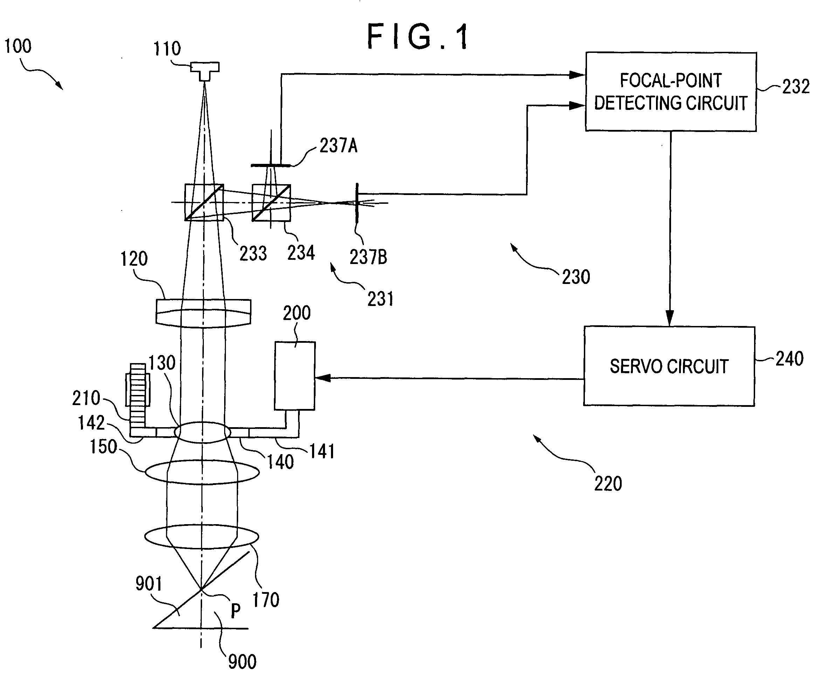

Fig. 1 schematically shows an arrangement of an optical displacement measuring instrument according to the first exemplary embodiment of the invention.

As shown in Fig. 1, the optical displacement measuring instrument 100 includes: a light source 110; a first collimating lens 120 for collimating light from the light source 110 and outputting the light as parallel light; a focusing lens 130 for diverging the parallel light from the first collimating lens 120 and outputting the light as diverging light; a second collimating lens 150 for collimating the diverging light from the focusing lens 130 and outputting the light as parallel light; an objective lens 170; an actuator 200 (moving unit) for moving the focusing lens 130 along the optical axis; a linear encoder 210 (position detector) for detecting a position of the focusing lens 130; and a focusing unit 220 for recognizing positional displacement between a focal point of the objective lens 170 and a measuring face 901 based on a focal point of reflected light having been reflected from the measuring face 901 and having passed through the objective lens 170, the second collimating lens 150 and the focusing lens 130 and for controlling the position of the focusing lens 130 with the actuator 200 so as to bring the focal point of the objective lens 170 into coincidence with the measuring face 901.

The light source 110 may be, for instance, a laser element.

The light source 110 and the first collimating lens 120 are spaced apart from each other by a predetermined distance so as to allow the light from the light source 110 to be collimated and outputted as the parallel light by the first collimating lens 120

The focusing lens 130 is disposed to oppose to the first collimating lens 120 and the second collimating lens 150. A periphery of the focusing lens 130 is supported by a lens holder 140. The lens holder 140, which is linked to the actuator 200 via an arm 141, is displaceable along the optical axis of the focusing lens 130. On the other hand, the lens holder 140 is also linked to the linear encoder 210 via a connector 142. In other words, the focusing lens 130 is disposed in such a manner that distances respectively from the first collimating lens 120 and the second collimating lens 150 are changeable.

The second collimating lens 150 is disposed to oppose to the objective lens 170 while being spaced apart from the objective lens 170 by a predetermined distance.

The objective lens 170 illuminates the parallel light outputted from the second collimating lens 150 onto the measuring face 901 as condensed light while outputting the reflected light from the measuring face 901 to the second collimating lens 150.

The focusing unit 220 includes: a focal point detector 230 for detecting a focal point; and a servo circuit 240 for controlling the actuator 200 based on a signal from the focal point detector 230.

The focal point detector 230 includes: a focal-point detecting optical system 231 for detecting the focal point by a pseudo-pinhole method; and a focal-point detecting circuit 232 for computing a positional relationship between the focusing lens 130 and the measuring face 901 based on a signal from the focal-point detecting optical system 231.

The focal-point detecting optical system 231 includes: a first beam splitter 233 disposed between the light source 110 and the first collimating lens 120 for splitting light from the first collimating lens 120; a second beam splitter 234 for splitting light from the first beam splitter 233 into two split light of first reflected light and second reflected light; a first light-receiving element array 237A disposed anterior to a focusing point (image-forming point) of the first reflected light split by the second beam splitter 234; and a second light-receiving element array 237B disposed posterior to a focusing point (image-forming point) of the second reflected light split by the second beam splitter 234.

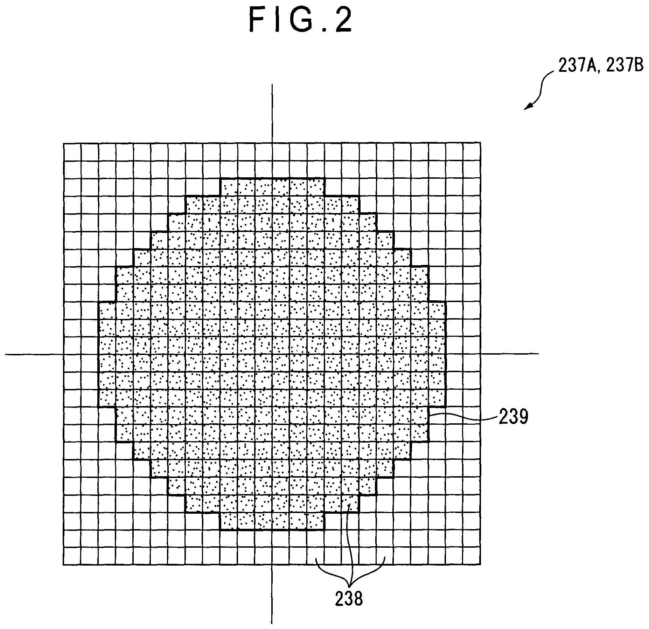

As shown in Fig. 2, the first light-receiving element array 237A and the second light-receiving element array 237B each are structured such that a plurality of pixels 238, which are exemplarily 'solid-state image sensors (CCD) in this embodiment, are two-dimensionally aligned to form a grating pattern. In each of the first light-receiving element array 237A and the second light-receiving element array 237B, the sum of light-receiving signals from pixels 238 within a substantially circular area 239, which is equivalent to a pinhole of a pinhole method, can be deemed as a pinhole-equivalent signal.

The focal-point detecting circuit 232 includes a light-receiving signal calculator for calculating a positional relationship between the focusing lens 130 and the measuring face 901 based on the light-receiving signals from the first light-receiving element array 237A and the second light-receiving element array 237B. Among the light-receiving signals from the plurality of pixels 238 within the area 239 predetermined in each of the first light-receiving element array 237A and the second light-receiving element array 237B, the light-receiving signal calculator excepts light-receiving signals from pixels 238 having the highest brightness to the nth highest brightness (n is an integer) from the calculation and calculates the total value of light-receiving signals from the remaining pixels 238 for each of the first light-receiving element array 237A and the second light-receiving element array 237B. For instance, among all the pixels 238 within the area 239 predetermined in each of the first light-receiving element array 237A and the second light-receiving element array 237B, the pixels 238 having the highest brightness to brightness of approximately one tenth to one half thereof are excepted from the calculation. Then, the total value of the light-receiving signals from the remaining pixels 238 is calculated. Subsequently, a difference in the total value of the light-receiving signals between the first light-receiving element array 237A and the second light-receiving element array 238B is fed to the servo circuit 240 as a focusing error signal.

The servo circuit 240 controls the actuator 200 based on the focusing error signal from the focal-point detecting circuit for adjusting the position of the focusing lens 130. In other words, the position of the focusing lens 130 is adjusted so that the condensed light from the objective lens 170 forms an image on the measuring face 901.

### Operation(s) and Advantage(s) of Optical Displacement Measuring Instrument

Light outputted from the light source 110 is collimated by the first collimating lens 120 to be parallel light, and subsequently incident on the focusing lens 130 to be diverging light. The diverging light from the focusing lens 130 is incident on the second collimating lens 150 to be collimated to be parallel light. The parallel light from the second collimating lens 150 is turned into condensed light by the objective lens 170 and illuminated on the measuring face 901.

Reflected light from the measuring face 901 passes through the objective lens 170, the second collimating lens 150, the focusing lens 130 and the first collimating lens 120. The reflected light is subsequently guided by the first beam splitter 233 to the focal-point detecting optical system 231.

In the focal-point detecting optical system 231, the reflected light is split by the second beam splitter 234 into two beams of light, and the two split beams of light are subsequently received by the first light-receiving element array 237A and the second light-receiving element array 237B respectively. Then, among the light-receiving signals from the plurality of pixels 238 in each of the first light-receiving element array 237A and the second light-receiving element array 237B, the focal-point detecting circuit 232 excepts the light-receiving signals from the pixels 238 having the highest brightness to the nth highest brightness (n is an integer) from the calculation and calculates the total value of light-receiving signals from the remaining pixels 238 so as to feed the servo circuit 240 with the difference in the total value of the light-receiving signals between the first light-receiving element array 237A and the second light-receiving element array 237B as the focusing error signal.

The servo circuit 240 operates the actuator 200 and controls the position of the focusing lens 130 so that the total values of the light-receiving signals of the first light-receiving element array 237A and the second light-receiving element array 237B become equal to each other.

With this arrangement, since the focusing lens 130 is moved in accordance with a profile of the measuring face so that the focal point of the objective lens 170 is brought into coincidence with the measuring face 901, the profile of the measuring face 901 can be measured by reading the position of the focusing lens 130 with the linear encoder 210.

The condensed light illuminated on the measuring face 901 is specularly and diffusely reflected on the measuring face 901. The specularly-reflected light and the diffusely-reflected light pass through the objective lens 170 and the like to be subsequently received by the first light-receiving element array 237A and the second light-receiving element array 237B.

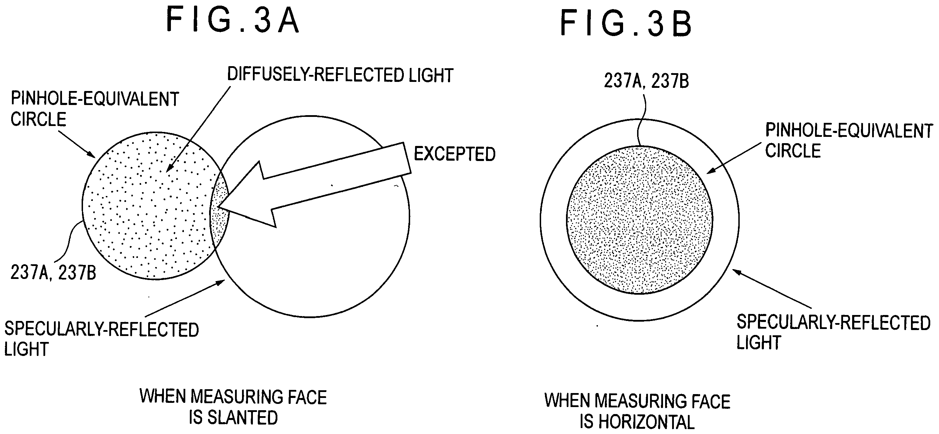

Exemplarily when the measuring face 901 is slanted and an angle between an outer edge of the condensed light and the reflected light (specularly-reflected light) from the measuring face 901 is close to zero, the specularly-reflected light is only partially received by the first light-receiving element array 237A and the second light-receiving element array 237B (see Fig. 3A). At this time, false focusing may generate a bulging and a recess that are not present in the profile of the measuring face.

According to this exemplary embodiment, among the light-receiving signals from the plurality of pixels 238 within the area 239 predetermined in each of the first light-receiving element array 237A and the second light-receiving element array 237B, the light-receiving signals from the pixels 238 having the highest brightness to the nth highest brightness (n is an integer) are not referenced to for focusing. In other words, focusing is performed without referencing to the specularly-reflected light from the measuring face 901 but based on the darker diffusely-reflected light. Thus, focusing can be correctly performed. Accordingly, it is possible to prevent a bulging and a recess that are not present in the profile of the measuring face from being generated by false focusing.

When the measuring face 901 is not slanted, the reflected light is brightest at its center while reducing its brightness away from the center. In the above instance, focusing can be performed without referencing to the central bright portion but based on the outer edge portion. Thus, there is no hindrance for focusing (see Fig. 3B).

### Modification(s) of First Exemplary Embodiment

While the optical system according to the first exemplary embodiment includes the light source 110, the first collimating lens 120, the focusing lens 130, the second collimating lens 150 and the objective lens 170, the arrangement is not limited thereto.

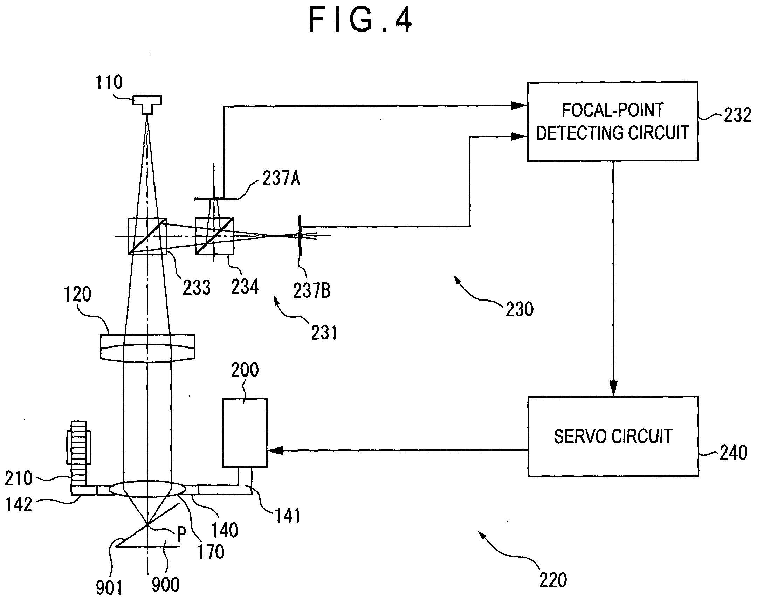

For instance, an arrangement shown in Fig. 4 may be employed. This arrangement includes the light source 110, the first collimating lens 120 and the objective lens 170 for condensing parallel light outputted from the first collimating lens 120, illuminating the condensed light onto the measuring face 901 of a target object 900 and receiving reflected light from the measuring face 901.

A periphery of the objective lens 170 is supported by the lens holder 140. The lens holder 140 is linked to the actuator 200 via the arm 141 and also linked to the linear encoder 210 via the connector 142.

In other words, compared with the first exemplary embodiment, the focusing lens 130 and the second collimating lens 150 are not provided in this arrangement. Accordingly, the objective lens 170 is movable in the optical axis direction, and a position of the objective lens 170 is detectable with the linear encoder 210.

According to this modification, the focusing unit 220 recognizes the positional displacement between the focal point of the objective lens 170 and the measuring face 901 based on the reflected light that has been reflected from the measuring face 901 and has passed through the objective lens 170, and operates the actuator 200 to move the objective lens 170 in the optical axis direction so that the focal point of the objective lens 170 is brought into coincidence with the measuring face 901. Accordingly, by reading the position of the objective lens 170 with the linear encoder 210, the profile of the measuring face 901 can be measured.

### Comparative Example

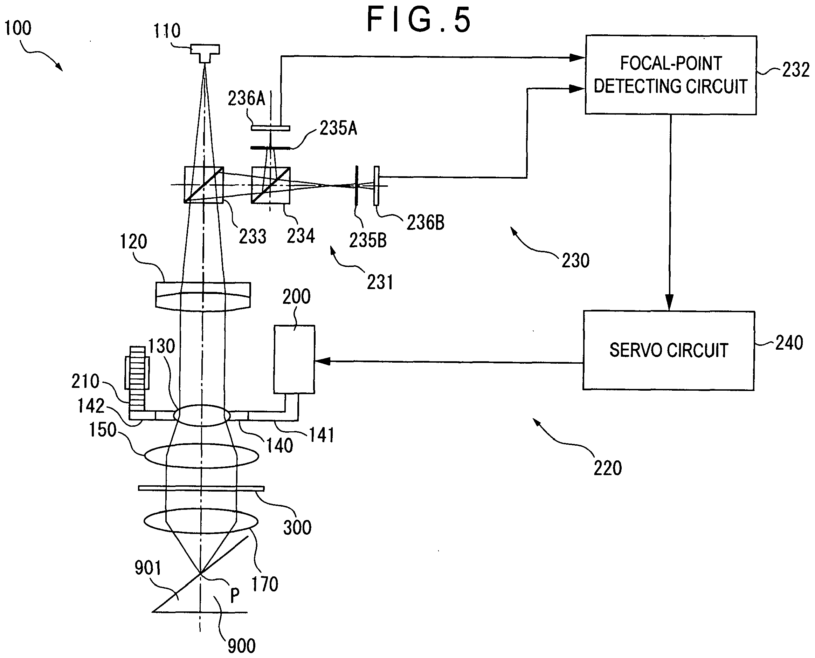

Fig. 5 schematically shows an arrangement of an optical displacement measuring instrument according to a comparative example. In the description of Fig. 5, the same component as in the first exemplary embodiment will be denoted by the same numeral, description of which will be omitted.

The optical displacement measuring instrument according to the comparative example is different from the optical displacement measuring instrument 100 according to the first exemplary embodiment in that the focal-point detecting optical system 231 is differently arranged and that a light shield body 300 is provided between the second collimating lens 150 and the objective lens 170.

The focal-point detecting optical system 231 according to the comparative example includes: the first beam splitter 233 disposed between the light source 110 and the first collimating lens 120 for splitting light from the first collimating lens 120; the second beam splitter 234 for splitting light from the first beam splitter 233 into two split light of first split light and second split light; two pinholes 235A and 235B respectively disposed anterior to a focusing point of the first split light and posterior to a focusing point of the second split light; and light-receiving elements 236A and 236 B (such as photodiode) for respectively detecting light volumes of light having passed through the pinholes 235A and 235B.

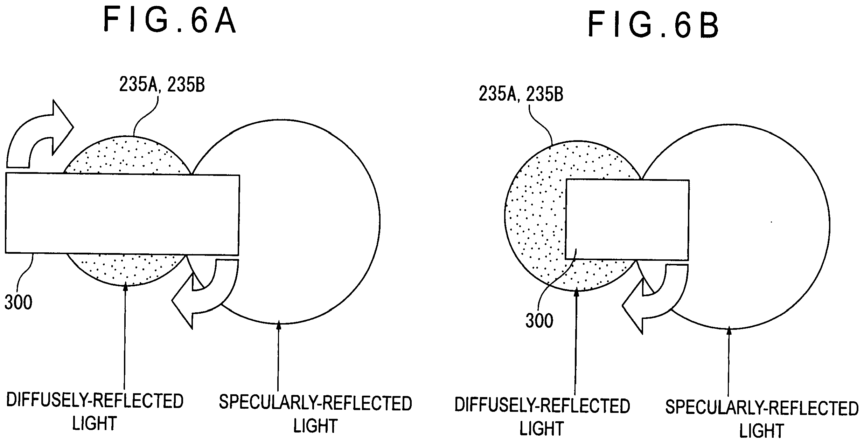

As shown in Figs. 6A and 6B, the light shield body 300 is shaped to partially shield an outer edge of reflected light and rotatable around the vicinity of the optical axis of diffusely-reflected light having been diffusely reflected on the measuring face 901 and transmitted through the objective lens 170.

Specifically, as shown in Fig. 6A, the light shield body 300 is shaped in a rectangle that shields a portion of the reflected light which extends across the reflected light through the center of the reflected light. Alternatively, as shown in Fig. 6B, the light shield body 300 is shaped in a rectangle that shields a portion of the reflected light which extends from substantially the center of the reflected light to partially the outer edge of the reflected light. In addition, the light shield body is rotatable about the vicinity of the optical axis of the diffusely-reflected light having been diffusely reflected on the measuring face 901 and transmitted through the objective lens 170.

While a mechanism for rotating the light shield body 300 may be a manual rotation mechanism, the mechanism for rotating the light shield body 300 is preferably a mechanism for automatically rotating the light shield body 300 in accordance with the measuring face.

According to the arrangement of the comparative example, the light shield body 300 for partially shielding the outer edge of the reflected light is interposed in an optical path of the reflected light having been reflected on the measuring face 901 and having passed through the objective lens 170 so as to be guided into the focusing unit 220. Thus, by placing the light shield body 300 in accordance with a slanting direction of the measuring face 901 at a position through which the specularly-reflected light from the measuring face 901 passes through, focusing can be correctly performed without referencing to the specularly-reflected light from the measuring face 901 but based on the darker diffusely-reflected light.

In addition, since the light shield body 300 is shaped in a rectangle for partially shielding the outer edge of the reflected light, the remaining portion of the diffusely-reflected light can be transmitted. Accordingly, focusing can be reliably performed based on the transmitted diffusely-reflected light.

Further, the light shield body 300 is rotatable about the vicinity of the optical axis of the diffusely-reflected light having been diffusely reflected on the measuring face 901 and transmitted through the objective lens 170. Thus, by manually or automatically rotating the light shield body 300 in accordance with the slanting direction of the measuring face 901, focusing can be correctly performed without referencing to the specularly-reflected light from the measuring face 901 but based on the darker diffusely-reflected light.

### Modification(s) of the comparative example

While the optical system according to the comparative example includes the light source 110, the first collimating lens 120, the focusing lens 130, the second collimating lens 150 and the objective lens 170, the arrangement is not limited thereto.

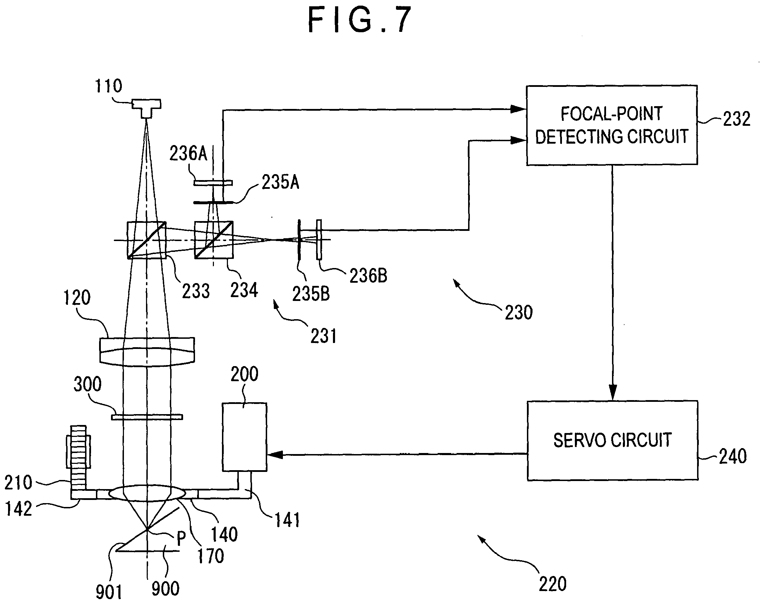

For instance, an arrangement shown in Fig. 7 may be employed. This arrangement includes the light source 110, the first collimating lens 120 and the objective lens 170 for condensing parallel light outputted from the first collimating lens 120, illuminating the condensed light onto the measuring face 901 of a target object 900 and receiving reflected light from the measuring face 901.

The periphery of the objective lens 170 is supported by the lens holder 140. The lens holder 140 is linked to the actuator 200 via the arm 141 and also linked to the linear encoder 210 via the connector 142.

In other words, compared with the comparative example, the focusing lens 130 and the second collimating lens 150 are not provided in this arrangement. Accordingly, the objective lens 170 is movable in the optical axis direction, and a position of the objective lens 170 is detectable with the linear encoder 210.

As in the modification of the first exemplary embodiment, according to this modification, the focusing unit 220 operates the actuator 200 to move the objective lens 170 in the optical axis direction so that the focal point of the objective lens 170 is brought into coincidence with the measuring face 901. Accordingly, by reading the position of the objective lens 170 with the linear encoder 210, the profile of the measuring face 901 can be measured.

Further, in the comparative example (Fig. 5) and the modification of the comparative example (Fig. 7), the focal-point detecting optical system 231 does not have to limitedly employ a double-pinhole method but may employ any other arrangement and method. For instance, as in the first exemplary embodiment (Fig. 1) and the modification of the first exemplary embodiment (Fig. 4), the first light-receiving element array 237A and the second light-receiving element array 237B may be respectively disposed anterior to the focusing point of the first split light split by the second beam splitter 234 and posterior to the focusing point of the second split light split by the second beam splitter 234.

A position at which the light shield body 300 is disposed is not limited to the position between the second collimating lens 150 and the objective lens 170 as in the second exemplary embodiment (Fig. 5) and the modification of the comparative example

(Fig. 7), but may be any other position.

## Claims

1. An optical displacement measuring instrument, comprising:
a light source (110);
a collimating lens (120) that collimates light from the light source (110) and outputs the light as parallel light;
an objective lens (170) that condenses the parallel light from the collimating lens (120), illuminates the condensed light onto a measuring face (901) of a target object (900) and receives reflected light from the measuring face (901);
a moving unit (200) that moves the objective lens (170) or a focusing lens (130) disposed between the objective lens (170) and the light source (110) along an optical axis;
a position detector (210) that detects a position of the objective lens (170) or a position of the focusing lens (130); and
a focusing unit (220) that recognizes a positional displacement between a focal point of the objective lens (170) and the measuring face (901) based on reflected light and operates the moving unit (200) to bring the focal point of the objective lens (170) into coincidence with the measuring face (901), the reflected light having been reflected on the measuring face (901) and having passed though the objective lens (170), wherein
the focusing unit (220) includes: a light splitter (234) for splitting the reflected light having reflected on the measuring face (901) and having passed through the objective lens (170) into two split light of first reflected light and second reflected light; a first light-receiving element array (237A) and a second light-receiving element array (237B) respectively disposed anterior to an image-forming point of the first reflected light and posterior to a image-forming point of the second reflected light, a plurality of pixels being two-dimensionally aligned in each of the first light-receiving element array (237A) and the second light-receiving element array (237B);
a light-receiving signal calculator (232) that, among light-receiving signals from a plurality of pixels within an area predetermined in each of the first light-receiving element array (237A) and the second light-receiving element array (237B), excepts light-receiving signals from pixels having the highest brightness to the nth highest brightness (n being an integer) and calculates a total value of light-receiving signals from the remaining pixels; and
a servo circuit (240) for operating the moving unit (200) so that the total value of the light-receiving signals of the first light-receiving element array (237A) calculated by the light-receiving signal calculator (232) becomes equal to the total value of the light-receiving signals of the second light-receiving element array (237B) calculated by the light-receiving signal calculator (232), the operation of the moving unit (200) bringing the focal point of the objective lens (170) into coincidence with the measuring face (901).

2. The optical displacement measuring instrument according to Claim 1, wherein
the light-receiving calculator (232), among the light-receiving signals from the plurality of pixels within a substantially circular area predetermined in each of the first light-receiving element array (237A) and the second light-receiving element array (237B), excepts the light-receiving signals from the pixels having the highest brightness to the nth highest brightness (n being an integer) and calculates the total value of the light-receiving signals from the remaining pixels.

## Patentansprüche

1. Optisches Verschiebungsmessinstrument, das umfasst:
eine Lichtquelle (110);
eine Kollimationslinse (120), die Licht von der Lichtquelle (110) kollimiert und das Licht als paralleles Licht ausgibt;
eine Objektivlinse (170), die das parallele Licht von der Kollimationslinse (120) sammelt, um mit dem gesammelten Licht eine Messseite (901) eines Zielobjekts (900) zu beleuchten, und um das von der Messseite (901) reflektierte Licht zu empfangen;
eine Bewegungseinheit (200), die die Objektivlinse (170) oder eine Fokussierungslinse (130), die zwischen der Objektivlinse (170) und der Lichtquelle (110) angeordnet ist, entlang einer optischen Achse bewegt;
einen Positionsdetektor (210), der eine Position der Objektivlinse (170) oder eine Position der Fokussierungslinse (130) erfasst; und
eine Fokussierungseinheit (220), die eine Positionsverschiebung zwischen einem Brennpunkt der Objektivlinse (170) und der Messseite (901) erkennt, basierend auf reflektiertem Licht, und die die Bewegungseinheit (200) steuert, um den Brennpunkt der Objektivlinse (170) dazu zu bringen, dass er mit der Messseite (901) zusammenfällt, wobei das reflektierte Licht an der Messseite (901) reflektiert wurde und durch die Objektivlinse (170) durchgegangen ist, wobei
die Fokussiereinheit (220) einschließt: einen Lichtsplitter (234), um das reflektierte Licht, das an der Messseite (901) reflektiert wurde und das durch die Objektivlinse (170) durchgegangen ist, in zwei Teillichter mit einem ersten reflektierten Licht und einem zweiten reflektierten Licht aufzuteilen; ein erstes Lichtempfangselementarray (237a) und ein zweites Lichtempfangselementarray (237b), die entsprechend vor einem Bilderzeugungspunkt des ersten reflektierten Lichts und nach einem Bilderzeugungspunkt des zweiten reflektierenden Lichts angeordnet sind,
wobei eine Vielzahl von Pixeln zweidimensional in jedem des ersten Lichtempfangselementarrays (237a) und des zweiten Lichtempfangselementarrays (237b) ausgerichtet sind;
einen Lichtempfangssignalberechner (232), der unter dem Lichtempfangssignalen von einer Vielzahl von Pixeln in einem Bereich, der in jedem des ersten Lichtempfangselementarrays (237a) und des zweiten Lichtempfangselementarrays (237b) vorbestimmt ist, solche Lichtempfangssignale von Pixeln ausnimmt, die die höchste Helligkeit bis zur n-höchsten Helligkeit (n ist eine natürliche Zahl) aufweisen, und der einen Gesamtwert der Lichtempfangssignale von den übrigen Pixeln berechnet; und
einen Servoschaltkreis (240) zum Ansteuern der Bewegungseinheit (200), so dass der Gesamtwert der Lichtempfangssignale des ersten Lichtempfangselementarrays (237a), der durch den Lichtempfangssignalberechner (232) berechnet wurde, gleich dem Gesamtwert der Lichtempfangssignale des zweiten Lichtempfangselementarrays (237b), der von dem Lichtempfangssignalberechner (232) berechnet wurde, wird, wobei die Ansteuerung der Bewegungseinheit (200) den Brennpunkt der Objektivlinse (170) mit der Messseite (901) zur Deckung bringt.

2. Optisches Verschiebungsmessinstrument nach Anspruch 1, wobei
der Lichtempfangsberechner (232) unter den Lichtempfangssignalen von der Vielzahl von Pixeln innerhalb eines im Wesentlichen kreisförmigen Bereichs, der in jedem des ersten Lichtempfangselementarrays (237a) und des zweiten Lichtempfangselementarrays (237b) vorbestimmt wurde, die Lichtempfangssignale von den Pixeln mit der höchsten Helligkeit bis zu der n-höchsten Helligkeit (n ist eine natürliche Zahl) ausnimmt und den Gesamtwert der Lichtempfangssignale von den übrigen Pixeln berechnet.

## Revendications

1. Instrument optique de mesure de déplacement comprenant :
une source de lumière (110),
une lentille de collimation (120) qui aligne la lumière provenant de la source de lumière (110) et émet la lumière sous forme de lumière parallèle,
une lentille d'objectif (170) qui condense la lumière parallèle provenant de la lentille de collimation (120), émet la lumière condensée sur une face de mesure (901) appartenant à un objet cible (900) et reçoit la lumière réfléchie de la face de mesure (901),
une unité de déplacement (200) qui déplace la lentille d'objectif (170) ou une lentille de focalisation (130) disposée entre la lentille d'objectif (170) et la source de lumière (110) le long d'un axe optique,
un détecteur de position (210) qui détecte la position de la lentille d'objectif (170) ou la position de la lentille de focalisation (130), et
une unité de focalisation (220) qui reconnaît un déplacement de position entre le foyer de la lentille d'objectif (170) et la face de mesure (901) sur la base de la lumière réfléchie, et manoeuvre l'unité de déplacement (200) pour amener le foyer de la lentille d'objectif (170) en coïncidence avec la face de mesure (901), la lumière réfléchie ayant été réfléchie sur la face de mesure (901) et ayant traversé la lentille d'objectif (170), dans lequel
l'unité de focalisation (220) inclut : un séparateur de lumière (234) destiné à séparer la lumière réfléchie qui s'est réfléchie sur la face de mesure (901) et a traversé la lentille d'objectif (170) en deux lumières séparées constituées d'une première lumière réfléchie et d'une seconde lumière réfléchie ; un premier réseau d'éléments de réception de lumière (237A) et un second réseau d'éléments de réception de lumière (237B) disposés respectivement avant un point de formation d'image de la première lumière réfléchie et après un point de formation d'image de la seconde lumière réfléchie, une pluralité de pixels étant alignés dans deux dimensions dans chacun du premier réseau d'éléments de réception de lumière (237A) et du second réseau d'éléments de réception de lumière (237B),
un calculateur de signal de réception de lumière (232) qui, parmi les signaux de réception de lumière provenant d'une pluralité de pixels à l'intérieur d'une zone prédéterminée dans chacun du premier réseau d'éléments de réception de lumière (237A) et du second réseau d'éléments de réception de lumière (237B), exclut les signaux de réception de lumière provenant de pixels présentant de la luminosité la plus élevée à la ne luminosité la plus élevée (n étant un nombre entier), et calcule la valeur totale de signaux de réception de lumière à partir des pixels restants, et
un circuit asservi (240) destiné à manoeuvrer l'unité de déplacement (200) de sorte à ce que la valeur totale des signaux de réception de lumière du premier réseau d'éléments de réception de lumière (237A), calculée par le calculateur de signal de réception de lumière (232), devienne égale à la valeur des signaux de réception de lumière du second réseau d'éléments de réception de lumière (237B), calculée par le calculateur de signal de réception de lumière (232), la manoeuvre de l'unité de déplacement (200) amenant le foyer de la lentille d'objectif (170) en coïncidence avec la face de mesure (901).

2. Instrument optique de mesure de déplacement selon la revendication 1, dans lequel
le calculateur de réception de lumière (232), parmi les signaux de réception de lumière provenant de la pluralité de pixels dans une zone sensiblement circulaire prédéterminée dans chacun du premier réseau d'éléments de réception de lumière (237A) et du second réseau d'éléments de réception de lumière (237B), exclut les signaux de réception de lumière provenant des pixels présentant de la luminosité la plus élevée à la ne luminosité la plus élevée (n étant un nombre entier) et calcule la valeur totale des signaux de réception de lumière à partir des pixels restants.
